# EUROPÄISCHE PATENTANMELDUNG

(11) **EP 4 741 778 A1**
(43) Veröffentlichungstag der Anmeldung: **13.05.2026**
(21) Anmeldenummer: 24212191.1
(22) Anmeldetag: 11.11.2024
(51) Int. Cl.: G01F 23/284, G01F 23/80, G01S 13/88

(54) **FÜLLSTANDSMESSVORRICHTUNG**

(71) Anmelder: SICK AG, 79183 Waldkirch (DE)
(72) Erfinder: Baldischweiler, Boris, 79276 Reute (DE); Weber, Thomas, 77960 Seelbach (DE)
(74) Vertreter: Manitz Finsterwald Patent- und Rechtsanwaltspartnerschaft mbB

(57) **Zusammenfassung**

Die Erfindung betrifft eine Füllstandsmessvorrichtung zur Bestimmung eines Füllstandes eines Mediums in einem Behälter, umfassend eine Signalerzeugungsvorrichtung, die ausgebildet ist, ein elektrisches Signal zu erzeugen, welches eine Sprungfunktion oder eine Impulsfunktion umfasst; eine Messleitung, die mit der Signalerzeugungsvorrichtung, insbesondere elektrisch, verbunden ist und von einem Prozessanschluss bis in das Medium hineinreicht, wobei die Messleitung dazu dient, das elektrische Signal in den Behälter und in Richtung des Mediums zu leiten, wobei das elektrische Signal zumindest teilweise an der Oberfläche des Mediums reflektiert wird und das reflektierte Signal das elektrische Signal beeinflusst; und eine Auswerteeinheit, die ausgebildet ist, basierend auf dem beeinflussten elektrischen Signal den Füllstand des Mediums zu ermitteln.

## Beschreibung

Die vorliegende Erfindung betrifft eine Füllstandsmessvorrichtung zur Bestimmung eines Füllstandes eines Mediums in einem Behälter.

Die präzise Bestimmung des Füllstands in Tanks ist eine häufige Anforderung in verschiedenen industriellen Anwendungen. Dabei stehen verschiedene Technologien zur Verfügung, um dieses Problem zu lösen. Zur Messung des Füllstands können beispielsweise optische, radarbasierte, kapazitive oder konduktive Sensoren, Schwinggabeln, Schwimmer oder kabelgebundene TOF-Verfahren (Time-Of-Flight-Verfahren) verwendet werden.

Bei kabelgebundenen TOF-Verfahren wird ein elektrischer Puls durch ein Kabel geschickt, welches in die Flüssigkeit des Tanks hineinreicht. Da das Kabel für den Abschnitt, welcher nicht in die Flüssigkeit hineinreicht, und für den Abschnitt, welcher in die Flüssigkeit hineinreicht, unterschiedliche effektive Impedanzen aufweist, wird der durch das Kabel gesendete elektrische Puls an der Flüssigkeitsoberfläche, d.h. der Grenze zwischen den beiden unterschiedlichen Impedanzen, reflektiert, wobei basierend auf der Laufzeit des elektrischen Pulses von einem Prozessanschluss hin zur Oberfläche der Flüssigkeit und der Laufzeit des reflektierten Signals von der Oberfläche der Flüssigkeit zurück zum Prozessanschluss auf den Füllstand des Tanks geschlossen werden kann.

Die Auswertung des Pulses beim kabelgebundenen TOF-Verfahren erfordert jedoch hohe Anforderungen an die Sende- und Empfangseinrichtungen, da diese hohen Auflösungen, oft bis in den Pikosekundenbereich, bereitstellen müssen, was die Komplexität und Kosten erhöht. Ein weiterer Nachteil besteht darin, dass zur Erfassung der Laufzeit oftmals viele Anregesignale nacheinander erforderlich sind, was sich negativ auf den Energieverbrauch auswirkt. Ferner führen die bestehenden Verfahren zu einer hohen Emission von Hochfrequenz-Störungen, da Anteile des Hochfrequenz-Pulssignals durch die als Antenne wirkende Messsonde abstrahlen können. Oftmals sind derartige Anwendungen deshalb auf den Einsatz in metallischen Behältern beschränkt.

Es ist eine Aufgabe der vorliegenden Erfindung, den vorstehenden Nachteilen Abhilfe zu schaffen und eine verbesserte Füllstandsmessvorrichtung zur Bestimmung eines Füllstandes eines Mediums in einem Behälter sowie ein entsprechendes Verfahren bereitzustellen.

Diese Aufgabe wird durch die Gegenstände der unabhängigen Ansprüche gelöst.

Ein erster Aspekt der Erfindung betrifft eine Füllstandsmessvorrichtung zur Bestimmung eines Füllstandes eines Mediums in einem Behälter, umfassend:
eine Signalerzeugungsvorrichtung, die ausgebildet ist, ein elektrisches Signal zu erzeugen, welches eine Sprungfunktion oder eine Impulsfunktion umfasst;
eine Messleitung, die mit der Signalerzeugungsvorrichtung, insbesondere elektrisch, verbunden ist und von einem Prozessanschluss bis in das Medium hineinreicht oder hineinreichen kann, wobei die Messleitung dazu dient, das elektrische Signal in den Behälter und in Richtung des Mediums zu leiten, wobei das elektrische Signal bevorzugt an der Oberfläche des Mediums zumindest zum Teil reflektiert wird und das reflektierte Signal das elektrische Signal beeinflusst; und eine Auswerteeinheit, die ausgebildet ist, basierend auf dem beeinflussten elektrischen Signal den Füllstand des Mediums zu ermitteln.

Die Erfindung setzt also auf der Erkenntnis auf, dass die Reflexion des elektrischen Signals an der Mediumsoberfläche das ursprüngliche elektrische Signal beeinflusst bzw. verändert und sich diese Veränderung in der Form des beeinflussten elektrischen Signals widerspiegelt, so dass basierend auf dem beeinflussten elektrischen Signal, insbesondere indirekt, die Laufzeit des elektrischen Signals und damit der Füllstand des Mediums ermittelt werden kann. Insbesondere wird der Füllstand des Mediums somit ohne eine direkte Messung oder Bestimmung der Laufzeit des elektrischen Signals bis zur Mediumsoberfläche und zurück (Time Of Flight) ermittelt. Das beeinflusste elektrische Signal ist insbesondere die Sprungantwort bzw. Impulsantwort des Systems auf das angelegte Eingangssignal.

Wenn hierin von der Laufzeit des elektrischen Signals gesprochen wird, ist dabei - wenn dies nicht anders ausgeführt wird - von der Laufzeit des elektrischen Signals von dem Prozessanschluss (oder von der Signalerzeugungsvorrichtung) hin zur Oberfläche des Medium und der Laufzeit des reflektierten Signals von der Oberfläche des Mediums zurück zum Prozessanschluss (und damit zur Auswerteeinheit) die Rede.

Die Signalerzeugungsvorrichtung ist beispielsweise eine Spannungsquelle, welche eine Spannung erzeugt, die zumindest teilweise die Form einer Sprungfunktion oder Impulsfunktion aufweist, und diese in die Füllstandsmessvorrichtung einspeist. Die Signalerzeugungsvorrichtung ist insbesondere in der Lage, das elektrische Signal schnell einzuschalten bzw. in das System einzuspeisen, d.h. mit einer Anstiegszeit, welche kürzer ist als 10 ns, als 1 ns oder als 100 ps. Hierdurch wird beispielsweise sichergestellt, dass die Füllstandsmessvorrichtung in der Lage ist, Messungen mit einer entsprechenden Messgenauigkeit und Auflösung durchzuführen. Ein schneller Anstieg des elektrischen Signals kann beispielsweise auch dadurch erzeugt werden, dass ein konstantes elektrisches Signal durch Umschalten eines Schalters "schlagartig" in das System eingespeist wird. Beispielsweise kann der Schalter als Teil der Signalerzeugungsvorrichtung ausgebildet sein und das elektrische Signal ein- und ausschalten. Mit anderen Worten verbindet der Schalter das von der Signalerzeugungsvorrichtung generierte Signal mit einem restlichen Teil der Füllstandsmessvorrichtung und trennt dieses wieder, sodass ein entsprechendes elektrisches Signal erzeugt wird.

Das elektrische Signal bzw. die Spannung wird insbesondere an die Messleitung angelegt bzw. über die Messleitung übertragen. Die Messleitung kann dabei jede geeignete Leitung, insbesondere Kabel, sein, welche in der Lage ist, elektrische Signale zu übertragen, wobei die Messleitung eine entsprechende Messleitungsimpedanz aufweist, welche insbesondere von der Permittivität des umgebenden Mediums abhängt. Beispielsweise kann die Messleitung auch mehrere verbundene Metallteile umfassen, welche mit einer in das Medium hineinragenden Metallsonde elektrisch verbunden sind. Die Metallteile können z.B. in einer Wandung des Behälters integriert sein oder beabstandet zur Wandung angeordnet sein.

Die Impedanz der Messleitung kann ferner von der Geometrie abhängen, welche hierin bevorzugt als konstant angenommen wird. Die Impedanz der Messleitung kann beschrieben werden als die charakteristische Impedanz des Übertragungsweges, z.B. eines Kabels, in Abhängigkeit von den umgebenden Materialeigenschaften entlang dieses Weges. Sie kann sich ändern, wenn sich das Medium - und insbesondere die Permittivität - ändert, in dem sich das Signal ausbreitet, etwa bei einem Wechsel von Luft zu einem flüssigen Medium. Das elektrische Signal wird über die Messleitung ausgehend von dem Prozessanschluss in Richtung des Mediums geführt. Die Messleitung ist bevorzugt sowohl gegenüber dem Prozessanschluss als auch gegenüber dem Medium elektrisch isoliert. Der Prozessanschluss ist beispielsweise eine mechanische Schnittstelle, über die die Füllstandsmessvorrichtung sicher und dicht an dem Behälter montiert ist und über die die die Messleitung mit dem restlichen Teil der Füllstandsmessvorrichtung verbunden ist. Das elektrische Signal wandert somit entlang der Messleitung in Richtung des Mediums. Da sich die Messleitungsimpedanz innerhalb des Mediums typischerweise von der Messleitungsimpedanz außerhalb des Mediums unterscheidet, erfolgt ein Impedanzsprung bei der Übertragung des elektrischen Signals an der Mediumsoberfläche, d.h. der Grenzfläche zwischen Medium und Luft bzw. an der Stelle, an der die Messleitung die Mediumsoberfläche durchdringt. Diese Impedanzänderung verursacht eine Reflektion des elektrischen Signals an der Mediumsoberfläche, wobei das reflektierte Signal das ursprünglich elektrische Signal beeinflusst. Im Folgenden wird die Impedanz der Messleitung für den Abschnitt, welcher in das Medium hineinreicht, als Mediumsimpedanz bezeichnet, während die Impedanz der Messleitung für den Abschnitt, welcher nicht in das Medium hineinreicht, als Referenzimpedanz bezeichnet wird. Die Stärke der Reflexion ist insbesondere abhängig von dem Impedanzunterschied zwischen der Referenzimpedanz und der Mediumsimpedanz. Ein größerer Impedanzunterschied führt zu einer entsprechend stärkeren Reflexion. Insbesondere überlagert sich das reflektierte Signal mit dem ursprünglich erzeugten elektrischen Signal, wodurch das ursprüngliche elektrische Signal abgeschwächt oder verstärkt werden kann. Eine Verstärkung drückt sich beispielsweise dadurch aus, dass sich die Amplitude des elektrischen Signals erhöht, wobei sich eine Abschwächung dadurch ausdrückt, dass die Amplitude des elektrischen Signals kleiner wird. Eine Abschwächung des elektrischen Signals erfolgt, insbesondere wenn die Referenzimpedanz größer als die Mediumsimpedanz ist. Entsprechend erfolgt eine Verstärkung des elektrischen Signals, insbesondere wenn die Referenzimpedanz kleiner als die Mediumsimpedanz ist. Insbesondere tritt durch die Reflexion eine Superposition der Reflexion mit dem Anregesignal, d.h. dem elektrischen Signal, auf, wobei die Reflexion je nach Ausprägung der Impedanzänderung die gleiche oder umgekehrte Polarität des Anregesignals aufweist und sich entsprechend überlagert.

Das reflektierte Signal verändert somit das ursprüngliche elektrische Signal, insbesondere die Amplitude des ursprünglichen elektrischen Signals. Der Zeitpunkt dieser Veränderung in dem veränderten bzw. beeinflussten elektrischen Signal kann somit dazu genutzt werden, um, zumindest indirekt, die Laufzeit des elektrischen Signals und damit den Füllstand des Mediums zu ermitteln. Da die Stärke der Reflexion und damit die Wirkung des reflektierten Signals auf das elektrische Signal von dem Impedanzunterschied zwischen der Referenzimpedanz und der Mediumsimpedanz abhängt, kann die Referenzimpedanz abhängig von der Mediumsimpedanz, welche von dem bekannten Medium abhängt, festgelegt werden. Insbesondere kann die Referenzimpedanz derart festgelegt werden, dass eine möglichst starke Reflexion des elektrischen Signals an der Mediumsoberfläche erreicht wird, um die Erfassung der daraus resultierenden Änderung im elektrischen Signal zu erleichtern.

Die Auswerteeinheit ist somit in der Lage, basierend auf dem beeinflussten elektrischen Signal den Füllstand des Mediums zu ermitteln. Die Auswerteeinheit dient insbesondere der Verarbeitung und Analyse von Signalen wie das beeinflusste Spannungssignal, insbesondere in Echtzeit. Dabei kann die Auswerteeinheit sowohl analoge als auch digitale Signale verarbeiten. Zusätzlich können anhand vorgegebener Algorithmen oder hinterlegter Regelwerke verschiedene Berechnungen oder Vergleiche durchgeführt werden, um Abweichungen zu erkennen, Entscheidungen zu treffen oder weitere Steuerbefehle an andere Systemkomponenten zu senden. Die Auswerteeinheit kann somit auch als Steuer- und Auswerteeinheit ausgebildet sein. Beispielsweise kann die Auswerteeinheit einen Mikrocontroller, einen digitalen Signalprozessor (DSP), eine programmierbare Logiksteuerung (PLC) oder einen Computer umfassen. Durch die Integration von Speicher- und Verarbeitungsfunktionen kann die Auswerteeinheit zudem Daten speichern und für die Analyse zur Verfügung stellen.

Vorteilhafterweise haben die veränderlichen Laufzeiten in der Elektronik der Füllstandsmessvorrichtung keinen Einfluss auf die Bestimmung des Füllstandes bzw. der Laufzeit, da erfindungsgemäß der Füllstand auf Basis des beeinflussten elektrischen Signals ermittelt wird, wobei die erste Flanke des elektrischen Signals den Startzeitpunkt darstellt und das reflektierte Signal das elektrische Signal derart beeinflusst, dass der Zeitpunkt der Veränderung als Ende der Laufzeitmessung bewertet werden kann. Ein weiterer Vorteil der Erfindung besteht darin, dass eine Füllstandsbestimmung mit wesentlich weniger Sendepulsen als nach dem Stand der Technik erfolgen kann. Im einfachsten Fall kann die Füllstandsbestimmung gemäß der Erfindung mittels eines einzigen Sendepulses ermittelt werden. Dies führt einerseits zu einer Verbesserung des Energieverbrauchs der Füllstandsmessvorrichtung sowie zu einer Reduktion von durch den Sensor verursachten Emissionen, wodurch regulatorische Anforderungen bezüglich der EMV-Verträglichkeit eingehalten werden können, so dass ein Einsatz der Füllstandsmessvorrichtung auch ohne Verwendung eines metallischen Behälters möglich ist. Darüber hinaus werden durch eine erfindungsgemäße Füllstandsmessvorrichtung schnelle Ansprechzeiten realisiert. Im Gegensatz zu herkömmlichen kabelgebundenen TOF-Verfahren ist die erfindungsgemäße Füllstandsmessvorrichtung einfacher und kostengünstiger zu realisieren. Die erfindungsgemäße Füllstandsmessvorrichtung ist insbesondere dazu geeignet, größere Tiefen mit 1 bis 10 cm Genauigkeit zu messen. Beispielsweise kann der Wasserstand an Schifffahrtsschleusen oder Stauseen gemessen werden. Aber auch kompaktere Anwendungen in einer Regenwasserspeicheranlage oder zur Kühlwasserstandsmessung in einem Motorraum sind möglich.

Weitere Ausführungsformen der Erfindung sind der Beschreibung, den Unteransprüchen und den Zeichnungen zu entnehmen.

Gemäß einer Ausführungsform ist die Auswerteeinheit ausgebildet, basierend auf dem beeinflussten elektrischen Signal eine Substitutionsgröße zu ermitteln, welche proportional zur Laufzeit des elektrischen Signals von dem Prozessanschluss hin zur Mediumsoberfläche und zurück und/oder zur Entfernung zwischen Mediumsoberfläche und dem Prozessanschluss ist, und basierend auf der Substitutionsgröße den Füllstand des Mediums zu ermitteln, wobei die Substitutionsgröße bevorzugt nicht der Laufzeit des elektrischen Signals entspricht. Die Substitutionsgröße kann eine von der Laufzeit des elektrischen Signals verschiedene Größe sein. Somit kann anstelle der Laufzeit des elektrischen Signals die Substitutionsgröße verwendet werden, um den Füllstand des Mediums zu ermitteln. Basierend auf der Substitutionsgröße kann die Laufzeit des elektrischen Signals jedoch, insbesondere indirekt, ermittelt und damit auf den Füllstand des Mediums geschlossen werden. Die Substitutionsgröße kann beispielsweise ein aus dem beeinflussten elektrischen Signal abgeleiteter bzw. basierend auf dem beeinflussten elektrischen Signal ermittelter Spannungswert sein. Der ermittelte Wert bzw. Betrag der Substitutionsgröße, beispielsweise ein gemessener Spannungswert, kann anschließend mittels einer Zuordnungstabelle oder auf andere geeignete Weise einem Füllstandswert zugeordnet werden, welcher dann als ermittelter Füllstand des Mediums festgelegt werden kann. Die Zuordnungstabelle kann insbesondere vorab empirisch bestimmt oder basierend auf den bekannten Systemeigenschaften berechnet worden sein.

Gemäß einer ersten Ausführungsform weist das beeinflusste elektrische Signal eine Pulsform auf, wobei die Auswerteeinheit ausgebildet ist, basierend auf einer Pulsbreite eines, insbesondere ersten Pulses, des beeinflussten elektrischen Signals ein Rechtecksignal zu erzeugen, dessen Breite im Wesentlichen der Pulsbreite des beeinflussten elektrischen Signals entspricht, und basierend auf dem Rechtecksignal die Substitutionsgröße zu ermitteln. Wie bereits vorstehend beschrieben, wirkt sich das reflektierte Signal auf das elektrische Signal aus und bewirkt insbesondere einen Abfall der Amplitude des elektrischen Signals. Das beeinflusste elektrische Signal weist somit eine Pulsform auf, welche zumindest durch eine steigende Flanke beim Erzeugen des elektrischen Signals und durch eine fallende Flanke beim Empfangen des reflektierten Signals gekennzeichnet ist. Insbesondere entspricht die Pulsbreite der Laufzeit des elektrischen Signals vom Prozessanschluss bis zur Mediumsoberfläche und zurück.

Basierend auf dem beeinflussten elektrischen Signal kann ein, insbesondere elektrisches, Rechtecksignal erzeugt werden, dessen steigende Flanke das Anlegen des elektrischen Signals anzeigt und dessen fallende Flanke das Detektieren des reflektierten Signals anzeigt. Anders ausgedrückt, wird das beeinflusste elektrische Signal in eine Rechtecksignal umgewandelt, welches nur eine Breite des ersten Pulses abbildet. Die Breite des Rechtecksignals entspricht somit genau der Laufzeit des elektrischen Signals vom Prozessanschluss zur Mediumsoberfläche und zurück. Das Rechtecksignal beinhaltet insbesondere die zur Ermittlung des Füllstands des Mediums notwendigen Laufzeitinformationen. Anstatt diese Laufzeitinformationen aufwändig und kostenintensiv mittels eines entsprechenden ADCs zu extrahieren, kann das Rechtecksignal genutzt werden, um die Substitutionsgröße zu ermitteln, über die der Füllstand auf einfachere Weise ermittelt werden kann.

Gemäß einer Ausführungsform ist die Auswerteeinheit ausgebildet, unter Verwendung eines Schwellenwertfilters das Rechtecksignal auf Basis des beeinflussten elektrischen Signals zu erzeugen, wobei das Rechtecksignal im Wesentlichen den Wert Null annimmt, wenn das beeinflusste elektrische Signal kleiner als ein vorgegebener Schwellenwert ist, und einen vordefinierten Wert ungleich Null annimmt, wenn das beeinflusste elektrische Signal größer als der vorgegebene Schwellenwert ist, wobei die Auswerteeinheit ausgebildet ist unter Verwendung einer Integratorkomponente eine Integration des Rechtecksignals durchzuführen, um einen Integrationswert zu ermitteln, und basierend auf dem Integrationswert den Füllstand des Mediums zu ermitteln. Das Rechtecksignal weist dabei den vordefinierten Wert nur dann auf, wenn das beeinflusste elektrische Signal größer als der vorgegebene Schwellenwert ist, so dass sichergestellt wird, dass nur der Zeitbereich erfasst wird, der vor einem durch das reflektierte Signal verursachten Abfall liegt und nach einem initialen Anstieg des elektrischen Signals. Insbesondere ist der vorgegebene Schwellenwert so gewählt, dass der vorgegebene Schwellenwert größer als eine Signalamplitude nach einem durch das reflektierte Signal verursachten Abfall des beeinflussten elektrischen Signals ist.

Um den Füllstand des Mediums zu ermitteln, kann anschließend anstelle der Laufzeit des elektrischen Signals die Substitutionsgröße ermittelt werden, welche proportional zur Laufzeit des elektrischen Signals und damit zur zu bestimmenden Entfernung ist. Hierzu ist die Auswerteeinheit ausgebildet, unter Verwendung der Integratorkomponente eine Integration des Rechtecksignals durchzuführen, um einen Integrationswert zu ermitteln, der proportional zur Laufzeit des elektrischen Signals ist. Basierend auf dem Integrationswert kann anschließend der Füllstand des Mediums ermittelt werden. In diesem Fall wird also der Integrationswert als Substitutionsgröße verwendet.

Der Schwellenwertfilter kann beispielsweise einen Komparator, eine Diode oder ein digitales Gatter umfassen. Die Integratorkomponente kann ferner einen Kondensator und/oder einen Operationsverstärker umfassen. Im Folgenden wird die Funktionsweise der Füllstandsmessvorrichtung rein beispielhaft für die Verwendung eines Komparators als Schwellenwertfilter und eines Kondensators als Integratorkomponente erläutert, wobei die Ausführungen entsprechend auch für eine Diode bzw. Operationsverstärker gelten.

Sobald der Komparator das beeinflusste elektrische Signal als Spannungssignal empfängt, vergleicht er das beeinflusste Spannungssignal beispielsweise mit einer vorgegebenen Referenzspannung, welche dem vorgegebenen Schwellenwert entspricht, und gibt das vorstehend beschriebene Rechtecksignal aus, welches insbesondere ebenfalls ein Spannungssignal ist. Basierend auf dem Rechtecksignal kann anschließend eine Stromquelle angesteuert werden, welche den Kondensator auflädt. Der Kondensator wird somit insbesondere nur für den Zeitraum aufgeladen, indem das Rechtecksignal einen Wert ungleich Null aufweist. Anders ausgedrückt, wird der Kondensator für eine der Laufzeit entsprechende Dauer aufgeladen. Die über den Kondensator abfallende Spannung ist somit insbesondere proportional zur Laufzeit des elektrischen Signals. Die über dem Kondensator abfallende Spannung kann anschließend beispielsweise mittels eines ADCs abgetastet bzw. gemessen werden und basierend auf dem ermittelten Spannungswert des Kondensators auf den Füllstand des Mediums geschlossen werden. Insbesondere kann dem gemessenen Spannungswert unter Verwendung einer Zuordnungstabelle ein zugehöriger Füllstandswert zugeordnet werden, welcher als ermittelter Füllstandswert festgelegt werden kann. Die Ermittlung des Füllstands des Mediums erfolgt somit insbesondere basierend auf einer Messung einer Kondensatorspannung. Auf der Grundlage der Spannungsmessung kann indirekt oder direkt die Pulsbreite und damit die Laufzeit des elektrischen Signals ermittelt werden. Die Auswerteeinheit kann ferner ausgebildet sein, unter Verwendung einer Entladeschaltung oder eines zum Kondensator parallel geschalteten Widerstands, den Kondensator bis zu einer nächsten Messung, insbesondere vollständig, zu entladen.

Gemäß einer Ausführungsform ist die Auswerteeinheit ausgebildet, den vorgegebenen Schwellenwert in Abhängigkeit des Impedanzunterschieds zwischen einer Referenzimpedanz, welche die Impedanz der Messleitung für den Abschnitt darstellt, welcher nicht in das Medium hineinreicht, und einer Mediumsimpedanz, welche die Impedanz der Messleitung für den Abschnitt darstellt, welcher in das Medium hineinreicht, festzulegen. Dies folgt insbesondere daraus, dass die Stärke der Reflexion des elektrischen Signals und damit der Beeinflussung des elektrischen Signals durch das reflektierte Signal von dem Impedanzunterschied der Mediumsimpedanz und der Referenzimpedanz abhängig ist. Ist die Wirkung des reflektierten Signals auf die Signalamplitude des elektrischen Signals, d.h. die Höhe des Abfalls des elektrischen Signals aufgrund des reflektierten Signals, welche durch die Höhe des Impedanzunterschieds definiert ist, bekannt, so kann der Schwellenwert entsprechend eingestellt werden, dass das Rechtecksignal die entsprechende steigende und fallende Flanke des beeinflussten elektrischen Signals möglichst präzise erfasst bzw. nachbildet. Der vorgegebene Schwellenwert muss dabei insbesondere so festgelegt sein, dass der vorgegebene Schwellenwert größer als die Signalamplitude des beeinflussten elektrischen Signals nach einem durch das reflektierte Signal verursachten Abfall ist. Hierdurch wird insbesondere sichergestellt, dass Signalwerte nach dem Abfall für die Bestimmung der Breite des Rechtecksignals unberücksichtigt bleiben.

Gemäß einer Ausführungsform ist die Auswerteeinheit ausgebildet, den vorgegebenen Schwellenwert des Schwellenwertfilters kontinuierlich oder in vorgegebenen Zeitabständen anzupassen, insbesondere zu reduzieren. Der vorgegebene Schwellenwert kann somit ein variabler Schwellenwert sein. Durch die Veränderung des Schwellenwerts kann ein Verlauf des beeinflussten elektrischen Signals ermittelt und basierend auf dem ermittelten Verlauf mehrere Reflexionsstellen erkannt werden. In einem solchen Fall könnten beispielsweise mehrere elektrische Signale nacheinander über die Signalerzeugungsvorrichtung erzeugt werden, wobei für jedes der erzeugten elektrischen Signale ein jeweiliger anderer vorgegebener Schwellenwert eingestellt wird. In diesem Fall könnte somit bewusst eine Verschlechterung der Ansprechzeit der Füllstandsmessvorrichtung in Kauf genommen werden, um mehrere Reflexionsstellen zu erfassen.

Gemäß einer Ausführungsform umfasst die Auswerteeinheit mehrere Schwellenwertfilter mit unterschiedlichen Schwellenwerten, insbesondere um eine Folge von unterschiedlichen reflektierten Signalen zu erfassen. Das elektrische Signal kann beispielsweise an unterschiedlichen Stellen der Mediumsoberfläche reflektiert werden, so dass mehrere unterschiedliche reflektierte Signale erzeugt werden. Innerhalb des Behälters können aber auch mehrere Medien vorhanden sein, so dass das elektrische Signal an der Oberfläche des jeweiligen Mediums reflektiert wird und ein jeweiliges reflektiertes Signal entsteht. Beispielsweise können in dem Behälter ein erstes Medium und ein zweites Medium vorhanden sein, wobei das erste Medium eine niedrigere Dichte als das zweite Medium aufweist, so dass das erste Medium auf dem zweiten Medium "schwimmt". Das erste Medium und das zweite Medium können unterschiedliche Impedanzen aufweisen, so dass eine Stärke der Reflexion des elektrischen Signals für die beiden Medien unterschiedlich ist, was wiederum in dem beeinflussten elektrischen Signal erkannt werden kann.

Die Füllstandsmessvorrichtung ist damit insbesondere mehrechofähig, d.h. in der Lage, mehrere Reflexionen oder Echos von einem einzelnen elektrischen Signal bzw. Puls zu erkennen und zu verarbeiten. Wie bereits beschrieben, besteht ein Vorteil eines mehrechofähigen Systems darin, dass mehrere Reflexionen von verschiedenen Oberflächen oder Materialien innerhalb eines Behälters erfasst werden können. Dies ermöglicht die Erfassung von Informationen über verschiedene Füllstandshöhen oder Schichtgrenzen innerhalb eines einzigen Messvorgangs oder innerhalb mehrerer konsekutiver Messvorgänge. Ferner kann durch die Erfassung von mehreren reflektierten Signalen die Zuverlässigkeit der Füllstandsmessung verbessert werden, da die zusätzlichen Informationen genutzt werden können, um darauf basierend eine präzisere Messung zu erhalten. Zusätzlich oder alternativ kann in einem ersten Schritt eine Anzahl der Medien ermittelt werden und anschließend in einem zweiten Schritt der Komparator so eingestellt werden, dass nur der Abstand zu einem ausgewählten Medium gemessen wird.

Gemäß einer Ausführungsform ist die Auswerteeinheit ausgebildet, mittels eines Analog-Digital-Wandlers (ADC) mit einer Abtastfrequenz von weniger als 10 MHz, weniger als 1 MHz, weniger als 100 kHz, weniger 10 kHz oder weniger als 1 kHz ein durch die Integration des Rechtecksignals erzeugtes Integrationssignal abzutasten, um den Integrationswert zu ermitteln. Wenn die Integration des Rechtecksignals beispielsweise mittels eines Kondensators erfolgt, indem der Kondensator für eine vorgegebene Zeitdauer, welche der Breite des Rechtecksignals entspricht, aufgeladen wird, so kann beispielsweise die über den Kondensator abfallende Spannung mittels eines ADCs abgetastet werden, um den entsprechenden Spannungswert zu ermitteln, welcher proportional zur Laufzeit des elektrischen Signals ist. Der ADC kann insbesondere in einen Mikrocontroller oder ein "System On Chip" (SOC) integriert sein. Vorteilhafterweise erfolgt die Ermittlung des Füllstands somit nicht durch die Verwendung von teuren und energieintensiven Auswertungskomponenten, sondern kann mittels einfacher ADCs durchgeführt werden, an die aufgrund der Einfachheit des Signals reduzierte Anforderungen gestellt werden können. Dies ist insbesondere darauf zurückzuführen, dass keine direkt zeitauflösenden Verfahren zur Ermittlung des Füllstands verwendet werden.

Gemäß einer Ausführungsform umfasst die Messleitung ein Koaxialkabel. Koaxialkabel haben den Vorteil, dass diese eine definierte charakteristische Grundimpedanz aufweisen, welche typischerweise zwischen 50 und 75 Ohm liegt, welche insbesondere entlang der gesamten Kabellänge konstant ist. Dies ist für die Ermittlung des Füllstands deshalb wichtig, da das reflektierte Signal nicht durch die charakteristischen Eigenschaften der Messleitung beeinflusst wird, und somit hauptsächlich von dem Impedanzunterschied zwischen der Referenzimpedanz und der Mediumsimpedanz abhängt. Mit anderen Worten sorgt die konstante Grundimpedanz des Koaxialkabels dafür, dass keine zusätzlichen Reflexionen aufgrund von Schwankungen in der Grundimpedanz auftreten. Die Grundimpedanz ist beispielsweise die Impedanz einer elektrischen Komponente ohne Einfluss des umgebenden Mediums, z.B. in einem idealen Vakuum oder einem leeren Raum. Ein weiterer Vorteil von Koaxialkabeln besteht darin, dass das Signal vor elektromagnetischen Störungen (EMV) geschützt wird. Durch die konstanten Eigenschaften des Koaxialkabels wird somit eine präzise und zuverlässige Übertragung des elektrischen Signals und des reflektierten Signals sichergestellt.

Gemäß einer Ausführungsform umfasst die Messleitung kein Koaxialkabel. Die Füllstandsmessvorrichtung kann diesem Fall beispielsweise tolerant gegenüber Toleranzsprüngen im Prozessanschluss sein, d.h. gegenüber Signalabweichungen, welche beispielsweise durch eine inkonstante Übertragung des elektrischen Signals bzw. des reflektierten Signals hervorgerufen werden können. Vorteilhafterweise werden durch die Verwendung einer Messleitung, welche kein Koaxialkabel umfasst, die Kosten reduziert. Hierbei ist jedoch zu beachten, dass das beeinflusste elektrische Signal und damit seine Verarbeitung komplexer wird. Nach dem Anlegen des elektrischen Signals, d.h. nach einer initialen steigenden Flanke des elektrischen Signals, ergibt sich eine auf die Messleitung zurückzuführende Reflexion mit derselben Polarität wie das elektrische Signal, wodurch das beeinflusste elektrische Signal eine Amplitudenerhöhung aufweist. Nach dem Empfangen des an der Mediumsoberfläche reflektierten Signals ist anschließend, wie bereits in den vorstehenden Ausführungen beschrieben, ein Abfall in dem beeinflussten elektrischen Signal zu verzeichnen. Um das sich ergebende beeinflusste elektrische Signal besser mittels einer Komparatorschaltung auswerten zu können, kann es vorher differenziert werden. Ist das System nicht mehrechofähig, so muss die Impedanz im System insbesondere so ausgelegt sein, dass es keine Reflexionen des reflektierten Signals erneut Richtung Prozessanschluss gibt, da diese Mehrfachreflexionen die einfache Auswertung des beeinflussten elektrischen Signals mittels der Komparatorschaltung beeinträchtigen würden.

Gemäß einer Ausführungsform umfasst das elektrische Signal eine Mehrzahl von Rechtecksimpulsen und das beeinflusste elektrische Signal eine Mehrzahl von, insbesondere gleichartigen, Pulsen, wobei die Auswerteeinheit ausgebildet ist, einen Gleichanteil des beeinflussten elektrischen Signals zu ermitteln und basierend auf dem Gleichanteil des beeinflussten elektrischen Signals den Füllstand des Mediums zu ermitteln. Die einzelnen Rechtecksimpulse können insbesondere einzelnen unterschiedlichen Messungen zugeordnet sein. Die Breite eines Rechtecksimpulses kann beispielsweise derart ausgelegt sein, dass die Pulsbreite des zugehörigen Pulses des beeinflussten elektrischen Signals eindeutig bestimmt werden kann. Mit anderen Worten werden die einzelnen Rechtecksimpulse als separate Sprungfunktionen verwendet, mit der das System für eine vorgegebene Zeitdauer beaufschlagt wird, wobei die vorgegebene Zeit durch die Breite des jeweiligen Rechtecksimpulses definiert ist. Das beeinflusste elektrische Signal kann wie bereits vorstehend beschrieben mittels einer Komparatorschaltung weiterverarbeitet werden. Das Ausgangssignal der Komparatorschaltung würde in dem vorliegenden Fall eine Reihe von Rechtecksimpulsen umfassen, wobei jeder Rechtecksimpuls des Ausgangssignals einem jeweiligen Puls des beeinflussten elektrischen Signals zuzuordnen ist und eine jeweilige Messung repräsentiert. Um einen Durchschnitt der Messungen zu ermitteln, kann der Gleichanteil des Ausgangssignals des Komparators beispielsweise mittels eines Tiefpassfilters ermittelt werden. Eine besonders vorteilhafte Ausführung ist dabei die Verwendung eines einfachen Tiefpassfilters, dessen Ausgangssignal mittels eines ADCs digitalisiert wird, so dass der Gleichanteil digital bestimmt werden kann. Beispielsweise kann der Gleichanteil bestimmt werden, indem eine Fouriertransformation des digitalisierten Signals bei 0 Hz ermittelt wird, was insbesondere einer gleitenden Mittelwertbildung des Zeitsignals entspricht. Der Mittelwert kann somit mittels einfacher kostengünstiger Hardware ermittelt werden.

Alternativ können mehrere einzelne Füllstandsmessungen gemäß einer der vorstehenden Ausführungsformen ermittelt werden und ein Mittelwert der einzelnen ermittelten Füllstande berechnet werden, um einen finalen Füllstandswert zu bestimmen.

Gemäß einer Ausführungsform ist die Signalerzeugungsvorrichtung ausgebildet, die Rechtecksimpulse des elektrischen Signals in variablen Zeitabständen zu erzeugen. Hierdurch soll sichergestellt werden, dass kohärente EMV-Störungen, die durch eine Mehrfachmessung und anschließender Mittelung nicht unterdrückbar sind, kompensiert werden. Mit anderen Worten erfolgt die Erzeugung der Rechtecksimpulse nicht gemäß einer festen Sendeperiode, sondern kann willkürlich oder gemäß einem anderen nicht-periodischen Muster erfolgen. Beispielsweise kann der Zeitabstand zwischen zwei aufeinanderfolgenden Rechtecksimpulsen zufällig aus einem Zeitintervall ausgewählt werden, welches Zeitabstandswerte zwischen einem Minimalzeitabstand und einem Maximalzeitabstand umfasst. Bei der vorgeschlagenen Auswertung bzw. Verarbeitung mittels eines Komparators ist die Verarbeitung eines aperiodischen Signals besonders einfach möglich, da sich die damit verbundenen Auswertungen asynchron realisieren lassen und keinen festen Clock-Bezug zum elektrischen Signal haben. Folglich kann die Emission des Systems weiter reduziert werden.

Gemäß einer weiteren Ausführungsform ist die Referenzimpedanz größer, insbesondere 5 mal, 10 mal, 12 mal oder 15 mal größer, als die Mediumsimpedanz. Insbesondere kann die Referenzimpedanz derart an die Mediumsimpedanz angepasst werden, dass eine möglichst starke Reflexion des elektrischen Signals an der Mediumsoberfläche erfolgt, um die entsprechende Reflexion auf einfache Weise aus dem beeinflussten elektrischen Signal erfassen zu können. Wenn das Medium Wasser ist, kann die Referenzimpedanz beispielsweise 50 Ohm, 60 Ohm oder 75 Ohm betragen.

In einer Ausführungsform ist die Messleitung an dem dem Medium zugewandten Ende kurzgeschlossen. Der Kurzschluss liegt insbesondere im Medium, sodass bei nicht vollständiger Reflexion an der Mediumsgrenze ein Restanteil bzw. eine Restwelle des elektrischen Signals an dem Kurzschluss reflektiert wird. Ist in dem beeinflussten elektrischen Signal eine Beeinflussung des elektrischen Signals nur durch die auf den Kurzschluss zurückzuführende Reflexion erkennbar, wobei insbesondere der Einfluss der auf den Kurzschluss zurückzuführenden Reflexion auf das elektrische Signal bekannt ist, so kann festgestellt werden, dass der Füllstand unterhalb des Erfassungsbereiches liegt. Ferner kann basierend auf dem beeinflussten elektrischen Signal ausgeschlossen werden, dass ein defekt des Sensors vorliegt.

Gemäß einer Ausführungsform ist die Messleitung, insbesondere als komplanare Leitung oder Mikrostrip-Leitung, gemeinsam mit der Auswerteeinheit und der Signalerzeugungsvorrichtung auf derselben Leiterplatte angeordnet. Die Füllstandsmessvorrichtung kann somit sehr kompakt ausgebildet sein und kostengünstig hergestellt werden. Dies ist vor allem beim Einsatz in kleineren Tanks vorteilhaft.

Die Füllstandsmessvorrichtung kann insbesondere derart ausgebildet sein, dass die Elektronikkomponenten mit Ausnahme der Messleitung wassergeschützt, beispielsweise mittels eines Vergusses, in einem entsprechenden Gehäuse untergebracht sind, so dass die Füllstandsmessvorrichtung direkt in dem Behälter untergebracht sein kann.

Ein weiterer Aspekt der Erfindung betrifft ein Verfahren zur Bestimmung eines Füllstandes eines Mediums in einem Behälter, umfassend die Schritte:
Erzeugen eines elektrischen Signals, welches eine Sprungfunktion oder eine Impulsfunktion umfasst, mittels einer Signalerzeugungsvorrichtung,
Leiten des elektrischen Signals über eine Messleitung in den Behälter und in Richtung des Mediums, wobei die Messleitung von einem Prozessanschluss bis in das Medium hineinreicht,
Reflektieren zumindest eines Teils des elektrischen Signals von der Oberfläche des Mediums, wobei das reflektierte Signal das elektrische Signal beeinflusst, und Ermitteln des Füllstandes des Mediums basierend auf dem beeinflussten elektrischen Signal mittels einer Auswerteeinheit.

Gemäß einer Ausführungsform wird das elektrische Signal mit einer im Wesentlichen konstanten Grundimpedanz geführt. Die Füllstandsmessvorrichtung kann beispielsweise derart ausgebildet sein, dass die Grundimpedanzen der elektrischen Komponenten einander angeglichen ist. Insbesondere wird das elektrische Signal bzw. das reflektierte Signal entlang der Messleitung mit einer im Wesentlichen konstanten Grundimpedanz geführt. Wie bereits beschrieben, kann dies mittels eines Koaxialkabels erreicht werden.

Für das Verfahren gelten die Ausführungen zu der erfindungsgemäßen Füllstandsmessvorrichtung entsprechend. Dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: eine schematische Darstellung einer Füllstandsmessvorrichtung,
- Fig. 2: eine detaillierte schematische Darstellung einer Füllstandsmessvorrichtung,
- Fig. 3: ein Schaltbild einer Füllstandsmessvorrichtung (a), ein beeinflusstes elektrisches Signal für unterschiedliche Füllstände (b) und die zugehörigen Ausgangsspannungen (c),
- Fig. 4: ein Schaltbild einer Füllstandsmessvorrichtung (a), ein beeinflusstes elektrisches Signal für unterschiedliche Füllstände (b), ein Ausgangssignal eines ersten Komparators für die unterschiedlichen Füllstände (c), ein Ausgangssignal eines zweiten Komparators für die unterschiedlichen Füllstände (d) und die zugehörigen Ausgangsspannungen (e),
- Fig. 5: eine Darstellung der Sprungantwort für eine Füllstandsmessvorrichtung mit einem Koaxialkabel (a) und für eine Füllstandsmessvorrichtung ohne Koaxialkabel (b) sowie die Darstellung einer Impulsantwort (c),
- Fig. 6: eine schematische Darstellung einer Auswerteeinheit zur Verarbeitung von mehreren Füllstandsmessungen, und
- Fig. 7: eine Ausführungsform der Füllstandsmessvorrichtung.

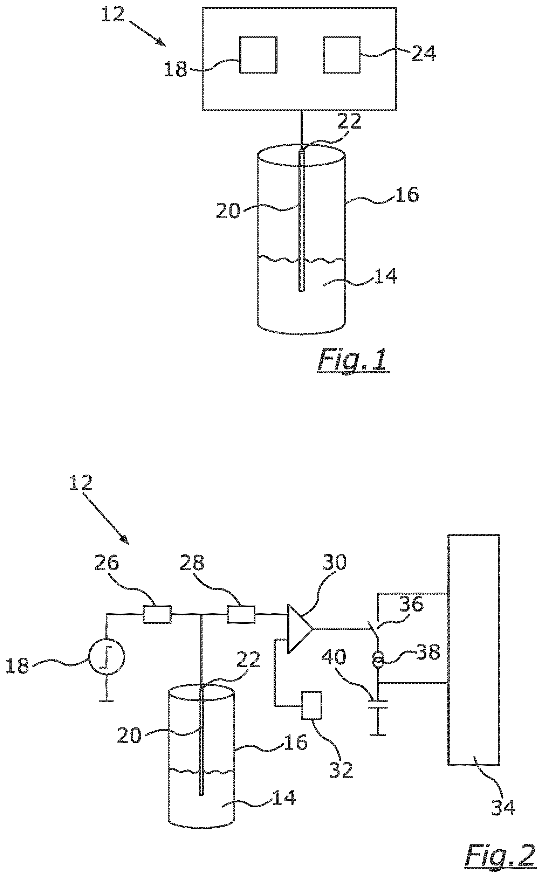

Fig. 1 zeigt eine schematische Darstellung einer Füllstandsmessvorrichtung 12 zur Bestimmung eines Füllstandes eines Mediums 14 in einem Behälter 16. Die Füllstandsmessvorrichtung 12 umfasst eine Signalerzeugungsvorrichtung in Form einer Spannungsquelle 18, die ausgebildet ist, ein elektrisches Signal, d.h. ein Spannungssignal, zu erzeugen, welches eine Sprungfunktion oder eine Impulsfunktion umfasst. Die Füllstandsmessvorrichtung 12 umfasst ferner eine Messleitung 20, die mit der Spannungsquelle 18 insbesondere elektrisch verbunden ist und von einem Prozessanschluss 22 bis in das Medium 14 hineinreicht, wobei die Messleitung 20 dazu dient, das Spannungssignal in den Behälter 16 und in Richtung des Mediums 14 zu leiten, das Spannungssignal zumindest teilweise an der Oberfläche des Mediums 14 reflektiert wird und das reflektierte Signal das Spannungssignal beeinflusst. Die Füllstandsmessvorrichtung 12 umfasst außerdem eine Auswerteeinheit 24, die ausgebildet ist, basierend auf dem beeinflussten Spannungssignal den Füllstand des Mediums 14 zu ermitteln.

Fig. 2 zeigt eine detaillierte schematische Darstellung der einzelnen Komponenten der Füllstandsmessvorrichtung 12. Die Spannungsquelle 18 der Füllstandsmessvorrichtung 12 erzeugt dabei ein Spannungssignal in Form einer Sprungfunktion. Über einen ersten Widerstand 26 und den Prozessanschluss 22 wird das Spannungssignal an die Messleitung 20 angelegt. Insbesondere läuft die von der Spannungsquelle 18 erzeugte Spannungswelle des Spannungssignals über den ersten Widerstand 26 zum Prozessanschluss und über einen zweiten Widerstand 28 zu einem Komparator 30. An dem Prozessanschluss 22 kann es eine Unstetigkeit im Impedanzverlauf geben, wenn sich die Impedanz der Schaltung an der Schnittstelle zur Messleitung von der Impedanz der Messleitung 20, insbesondere der Referenzimpedanz 46, unterscheidet. Vorzugsweise sind die Impedanz der Schaltung und die Referenzimpedanz 46 aneinander angeglichen, so dass es am Prozessanschluss 22 keine Unstetigkeit bzw. keinen Impedanzsprung gibt. Die Spannungswelle läuft also vom Prozessanschluss 22 über die Messleitung 20 hin zum Medium 14 und wird beim Erreichen der Mediumsoberfläche von der Mediumsoberfläche reflektiert, so dass ein reflektiertes Signal entsteht, welches von der Mediumsoberfläche in Richtung des Prozessanschlusses 22 läuft.

Die Reflexion der Spannungswelle wird durch den Impedanzunterschied zwischen der Impedanz der Messleitung außerhalb des Mediums 14, d.h. der Referenzimpedanz 46, und der Impedanz der Messleitung 14 innerhalb des Mediums, d.h. der Mediumsimpedanz 48, verursacht. Je stärker bzw. größer der Impedanzunterschied ist, desto stärker ist auch die Reflexion der Spannungswelle. Die Reflexion der Spannungswelle, d.h. das reflektierte Signal, beeinflussen das Spannungssignal, indem das reflektierte Signal zu einem Abfall in dem Spannungssignal führt. Das beeinflusste Spannungssignal, welches insbesondere am Eingang des Komparators 30 vorliegt, wird vom Komparator 30 weiterverarbeitet, um aus dem beeinflussten Spannungssignal Informationen zu extrahieren, mit denen der Füllstand des Mediums 14 in dem Behälter 16 ermittelt werden kann. Hierzu vergleicht der Komparator 30 das beeinflusste Spannungssignal mit einer vorgegebenen Vergleichsspannung, die vorliegend von einem Digital-Analog-Wandler (DAC) 32 erzeugt wird, welcher als Teil eines Mikrocontrollers 34 ausgebildet sein kann. Die Vergleichsspannung des Komparators 30 kann insbesondere veränderbar sein und mittels des DAC 32 kontinuierlich oder in vorgegebenen Zeitabständen reduziert oder vergrößert werden.

Wie bereits beschrieben, beeinflusst das reflektierte Signal das Spannungssignal, indem es zu einem Abfall der Spannung führt. Die Höhe des Spannungsabfalls ist dabei von der Höhe des Impedanzunterschieds zwischen der Referenzimpedanz 46 und der Mediumsimpedanz 48 abhängig. Ist die Referenzimpedanz 46 beispielsweise 10 mal größer als die Mediumsimpedanz 48, so führt dies zu einem Abfall der ursprünglichen Spannung um bis zu 90%. Basierend auf diesem Wissen kann die Vergleichsspannung des Komparators 30 derart festgelegt werden, dass das Ausgangssignal des Komparators 30, welches ein Rechtecksignal ist, die steigende Flanke des beeinflussten Spannungssignals sowie die durch das reflektierte Signal verursachte fallende Flanke des beeinflussten Spannungssignals abbildet. Beispielsweise kann bei einem durch das reflektierte Signal verursachten Spannungsabfall um 90% die Vergleichsspannung auf einen Spannungswert von 20% des initialen Spannungssignals gesetzt werden. Die Breite des von dem Komparator 30 ausgegebenen Rechtecksignals entspricht dann der Laufzeit der Spannungswelle von dem Prozessanschluss zur Mediumsoberfläche und zurück. Das Ausgangssignal des Komparators 30 weist für alle Werte des beeinflussten Spannungssignals, welche größer als die vorgegebene Vergleichsspannung sind, einen Spannungswert V_{high} auf und für alle Werte des beeinflussten Spannungssignals, welche kleiner als die vorgegebene Vergleichsspannung sind, einen Spannungswert V_{low} oder einen Spannungswert von 0 V. Basierend auf dem Ausgangssignal des Komparators 30 wird anschließend über einen Schalter 36 eine Stromquelle 38 angesteuert, welche für die durch das Rechtecksignal definierte Zeitdauer einen Ausgangskondensator 40 auflädt. Der Spannungsabfall über den Ausgangskondensator 40 ist dabei proportional zur Laufzeit der Spannungswelle vom Prozessanschluss 22 zur Mediumsoberfläche und zurück bzw. indirekt proportional zum Füllstand des Mediums 14 in dem Behälter 16. Dementsprechend kann basierend auf einer Messung der Spannung des Ausgangskondensators 40 auf den Füllstand des Mediums 14 in dem Behälter 16 geschlossen werden. Die Zeitmessung, d.h. die Messung der Laufzeit der Spannungswelle, wurde somit in eine Spannungsmessung überführt. Die Messung bzw. Erfassung der Spannung des Ausgangskondensators 40 kann beispielsweise durch einen entsprechenden nicht gezeigten ADC 62 des Mikrocontrollers 34 erfolgen.

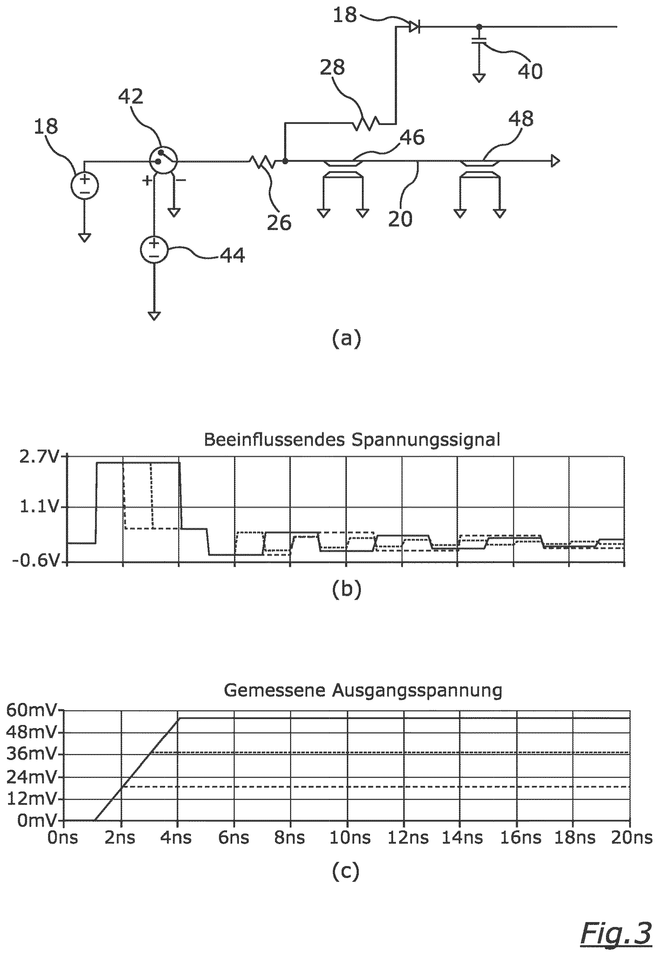

Fig. 3(a) zeigt ein Schaltbild einer Füllstandsmessvorrichtung 12. Dabei wird über einen schnellen Schalter 42 das Spannungssignal der Spannungsquelle 18 abrupt über den ersten Widerstand 26 an die Messleitung 20 angelegt. Der Schalter 42 wird über einen Pulsgenerator 44 in die geschlossene bzw. offene Position geführt. Durch das alternierende Ein- und Ausschalten des Schalters 42 kann somit eine Folge von Rechtecksimpulsen erzeugt werden. Wie bereits vorstehend beschrieben kann eine Spannungswelle des Spannungssignals über die Messleitung 20 hin zum Medium 14 geleitet werden, wobei die Messleitung 20 außerhalb des Mediums 14 eine zugehörige Referenzimpedanz 46 aufweist, wohingegen die Messleitung 20 innerhalb des Mediums 14 eine zugehörige Mediumsimpedanz 48 aufweist. Aufgrund des Impedanzunterschieds zwischen der Referenzimpedanz 46 und der Mediumsimpedanz 48 erfolgt eine Reflexion der Spannungswelle zurück zum Prozessanschluss, welches einen Spannungsabfall im Spannungssignal verursacht. Das beeinflusste Spannungssignal kann dazu benutzt werden, um einen Ausgangskondensator 40 aufzuladen und dadurch auf den Füllstand des Mediums 14 in dem Behälter 16 zu schließen. In der vorliegenden Ausführungsform wird anstelle des zuvor beschriebenen Komparators 30 eine Diode 50 eingesetzt, um einen Spannungsschwellenwert festzulegen und das Rechtecksignal zu erzeugen, welches eine der Laufzeit der Spannungswelle entsprechende Breite aufweist.

Fig. 3(b) zeigt das am Eingang der Diode 18 abgegriffene beeinflusste Spannungssignal. Wie aus der Grafik zu erkennen ist, fällt das Spannungssignal nach einem initialen, steilen Anstieg wieder auf einen Wert ab, welcher ungefähr 20% des initialen Spannungswerts entspricht, wobei der Spannungsabfall durch das reflektierte Signal verursacht wird. Weitere Abfälle bzw. Anstiege des beeinflussten Spannungssignals, welche aus dem Graphen in Fig. 3(b) hervorgehen, sind auf weitere Reflexionen der Spannungswelle zurückzuführen. Um die Laufzeit der Spannungswelle und damit den Füllstand des Mediums zu ermitteln, ist jedoch insbesondere der Zeitpunkt der ersten fallenden Flanke relevant. Dementsprechend wird die Diode 50 derart eingestellt, dass die Vergleichsspannung größer als 20% des Ausgangsspannungswerts der Spannungsquelle 18 ist, so dass das entstehende Rechtecksignal eine Breite aufweist, welche gleich der Breite des beeinflussten Spannungssignals von einer ersten steigenden Flanke bis zu einer ersten fallenden Flanke ist. Vorliegend liegt die Vergleichsspannung der Diode bei 30% der Einschaltspannung der Spannungsquelle 18. Das beeinflusste Spannungssignal ist gemäß Fig. 3(b) für unterschiedliche Füllstände gezeigt. Die Füllstände umfassen einen ersten, einen zweiten und einen dritten Füllstand, wobei der erste Füllstand höher ist als der zweite Füllstand und der zweite Füllstand höher ist als der dritte Füllstand. Wie in Fig. 3(b) erkennbar, erfolgt der Abfall des Spannungssignals für den ersten Füllstand aufgrund der kürzeren Laufzeit der Spannungswelle am frühesten. Entsprechend erfolgt der Abfall des Spannungssignals für den zweiten Füllstand früher als für den dritten Füllstand.

Fig. 3(c) zeigt einen Verlauf der Ausgangskondensatorspannung für die unterschiedlichen Füllstände. Wie zu erkennen ist, steigt die Spannung des Ausgangskondensators 40 linear für die Dauer, während der das Rechtecksignal einen Spannungswert V_{high} aufweist. Sobald das Rechtecksignal wieder auf den Wert 0V abfällt, wird der Ausgangskondensator 40 nicht mehr aufgeladen und stagniert auf dem erreichten Spannungsniveau. Wie aus Fig. 3(c) zu entnehmen ist, ist der über dem Ausgangskondensator 40 abfallende Spannungswert für niedrigere Füllstände höher als für höhere Füllstände. Dies ist dadurch begründet, dass die Ladedauer des Ausgangskondensators im Idealfall der Laufzeit der Spannungswelle entspricht und somit für niedrigere Füllstände größer ist als für höhere Füllstände.

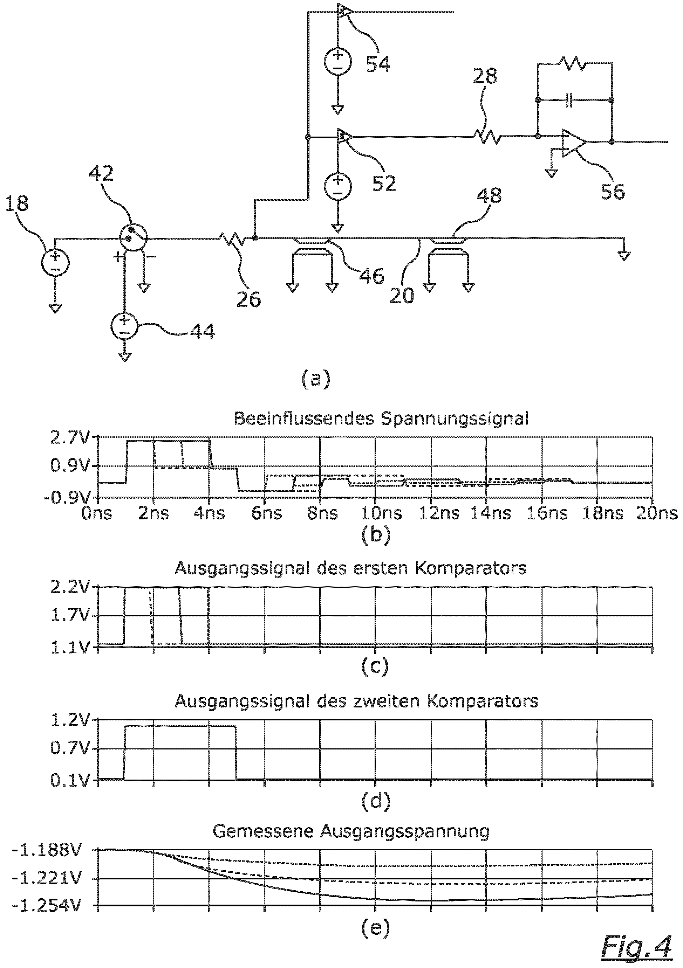

Fig. 4(a) veranschaulicht ein Schaltbild einer Füllstandsmessvorrichtung 12. Im Unterschied zum Schaltbild der Fig. 3(a) umfasst die Füllstandsmessvorrichtung 12 einen ersten Komparator 52 und einen zweiten Komparator 54. Ein weiterer Unterschied besteht darin, dass anstelle eines Ausgangskondensators 40 ein Operationsverstärker 56 eingesetzt wird, um das durch den ersten Komparator 52 erzeugte Rechtecksignal zu integrieren. In dieser Ausführungsform muss der integrierte Wert jedoch direkt abgegriffen werden, da keine Speicherung des Signalwerts wie beim Ausgangskondensator 40 erfolgt. Der erste Komparator 52 vergleicht, wie bereits zuvor ausgeführt, das beeinflusste Spannungssignal, welches in Fig. 4(b) gezeigt ist, mit einer Vergleichsspannung, welche größer als der Spannungswert des beeinflussten Spannungssignals nach einem ersten durch das reflektierte Signal induzierten Spannungsabfall ist. Das Ausgangssignal des Komparators bildet somit die erste steigende Flanke und die erste fallende Flanke des beeinflussten Spannungssignals nach, wie in Fig. 4(c) ersichtlich. Der zweite Komparator 54 hingegen ist so eingestellt, dass dessen Vergleichsspannung kleiner ist als das Spannungsniveau nach einem ersten Abfall des beeinflussten Spannungssignals, jedoch höher als das Spannungsniveau des beeinflussten Spannungssignals nach einem zweiten Abfall, welcher beispielsweise durch weitere Reflexionen verursacht wird. Das hierdurch erzeugte Signal, d.h. das Ausgangssignal des zweiten Komparators 54, ist in Fig. 4(d) gezeigt. Es können somit zusätzliche Komparatoren dazu genutzt werden, um mehrere Reflexionen zu erfassen und damit ein mehrechofähiges System zu schaffen. Eine weitere Verarbeitung des Ausgangssignals des zweiten Komparators 54 ist in Fig. 4(a) nicht vorgesehen. Grundsätzlich kann das Ausgangssignal des zweiten Komparators 54 jedoch wie das Ausgangssignal des ersten Komparators 52 verarbeitet werden, vorliegend beispielsweise mittels eines entsprechenden Operationsverstärkers. In Fig. 4(e) ist das Ausgangssignal des Operationsverstärkers 56 dargestellt, wobei ein betragsmäßig höheres Spannungssignal, wie bereits in Fig. 3(c), einen niedrigeren Füllstand und somit eine längere Laufzeit der Spannungswelle anzeigt.

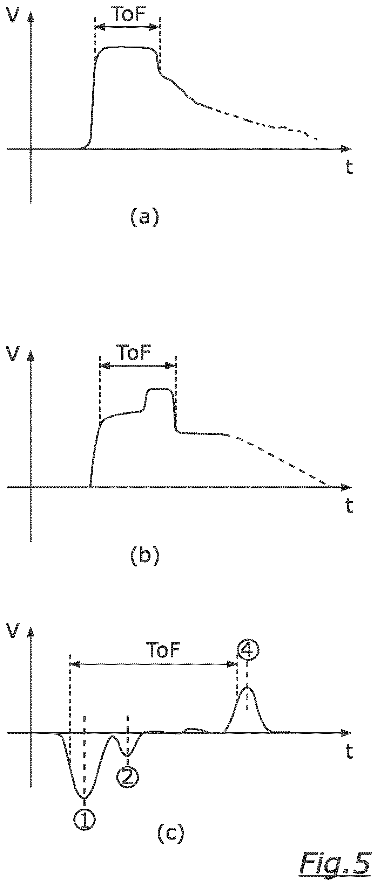

In Fig. 5(a) ist skizzenhaft das beeinflusste Spannungssignal, d.h. die Sprungantwort, für eine Sprungfunktion als Eingangsspannungssignal dargestellt, wenn die Füllstandsmessvorrichtung 12 mit einem Koaxialkabel als Messleitung 20 ausgestattet ist. Das beeinflusste Spannungssignal weist eine Pulsform auf, welche durch eine steigende Flanke beim Erzeugen des elektrischen Signals und durch eine fallende Flanke beim Empfangen des reflektierten Signals gekennzeichnet ist. Die Pulsbreite entspricht dabei der Laufzeit der Spannungswelle.

In Fig. 5(b) ist skizzenhaft das beeinflusste Spannungssignal, d.h. die Sprungantwort, für eine Sprungfunktion als Eingangsspannungssignal dargestellt, wenn die Füllstandsmessvorrichtung 12 nicht mit einem Koaxialkabel als Messleitung 20 ausgestattet ist. Nach dem Anlegen des Spannungssignals, d.h. der steigenden Flanke des Spannungssignals, ergibt sich eine auf die Messleitung 20 zurückzuführende Reflexion mit derselben Polarität wie das Spannungssignal, wodurch das beeinflusste Spannungssignal eine Amplitudenerhöhung aufweist. Nach dem Empfangen des an der Mediumsoberfläche reflektierten Signals ist anschließend ein Abfall in dem beeinflussten Spannungssignal zu verzeichnen.

In Fig. 5(c) ist skizzenhaft das beeinflusste Spannungssignal, d.h. die Impulsantwort, für eine Impulsfunktion als Eingangsspannungssignal dargestellt. Wie zu erkennen, wird ein Eingangsimpuls angelegt, welcher nach einer entsprechenden Laufzeit als reflektierter Impuls in dem beeinflussten Spannungssignal zu erkennen ist. Vorteilhaft bei der Nutzung einer Impulsfunktion als Eingangsspannungssignal ist, dass erwartungsgemäß Medien mit kleinen Dielektrizitätskonstanten erfasst werden können, auch wenn sich die Amplitude des reflektierten Impulses in diesen Fällen verkleinert. Ferner können kleine Impedanzunterschiede zwischen der Mediumsimpedanz 48 und der Referenzimpedanz 46 erfasst werden.

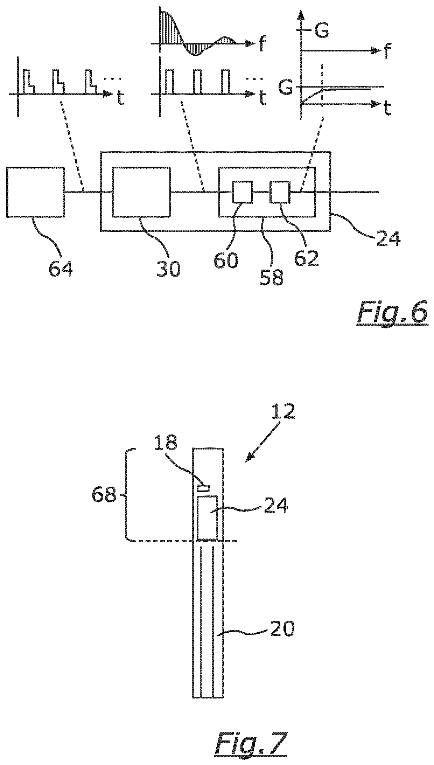

Fig. 6 zeigt eine schematische Darstellung einer Auswerteeinheit 24 zur Verarbeitung von mehreren Füllstandsmessungen. Die Auswerteeinheit 24 umfasst einen Komparator 30 sowie eine Mittelwertberechnungseinheit 58, die einen Tiefpassfilter 60 sowie einen Analog-Digital-Wandler (ADC) 62 umfasst, und empfängt das beeinflusste Spannungssignal über eine Vorverarbeitungsschaltung 64, welche unter anderem die Spannungsquelle 18 sowie die Messleitung 20 umfasst. Das Spannungssignal, welches mittels der Spannungsquelle 18 erzeugt wird, wurde vorliegend über den schnellen Schalter 42 periodisch an- und ausgeschaltet bzw. periodisch mit der Spannungsquelle 18 verbunden und getrennt, sodass das Ausgangssignal, d.h. das unbeeinflusste Spannungssignal, mehrere Rechtecksimpulse umfasst. Jeder Rechtecksimpuls ist dabei einer jeweiligen Messung zuordenbar. Entsprechend weist das durch das reflektierte Signal beeinflusste Spannungssignal ebenfalls eine Pulsform auf, welche skizzenhaft in Fig. 6 dargestellt ist. Ein jeweiliger Puls des beeinflussten Spannungssignal weist dabei einer erste steigende Flanke auf, welche auf ein jeweiliges Einschalten der Spannung durch den schnellen Schalter 42 zurückzuführen ist und welche zu einem Anstieg der Spannung auf ein erstes Spannungsniveau führt, eine erste fallende Flanke, welche durch das reflektierte Signal verursacht wird und welche zu einem Abfall der Spannung auf ein zweites Spannungsniveau führt, und eine zweite fallende Flanke, welche durch weitere Reflexionen des Spannungssignals bzw. der Spannungswelle und/oder durch das Trennen der Spannung durch den schnellen Schalter 42 verursacht wird und welche zu einem Abfall der Spannung auf ein Ausgangsniveau bzw. einem Nullniveau führt.

Das beeinflusste Spannungssignal wird mittels des Komparators 30 weiterverarbeitet, wobei die Vergleichsspannung des Komparators 30 derart eingestellt wird, dass sie größer als das zweite Spannungsniveau ist. Die Signalanteile nach dem ersten Abfall des beeinflussten Spannungssignals werden somit herausgefiltert, sodass das von dem Komparator 30 ausgegebene Signal verbleibt, welches eine Folge von Rechtecksimpulsen umfasst.

Die einzelnen Pulse des Ausgangssignals des Komparators 30 sind dabei einer jeweiligen Messung zuordenbar. Die einzelnen Pulse des Ausgangssignals des Komparators 30 können in ihrer Breite und auch ihrer Amplitude voneinander, zumindest geringfügig, abweichen. Um die Genauigkeit der Gesamtmessung zu verbessern ist es daher vorteilhaft, einen Mittelwert der Einzelmessungen zu bilden. Hierfür kann mittels der Mittelwertberechnungseinheit 58 ein Mittelwert der Einzelmessungen ermittelt werden. Besonders einfach kann dies dadurch erfolgen, dass der Gleichanteil G des pulsförmigen Ausgangssignals des Komparators 30 ermittelt wird. Mittels des Tiefpassfilters 60 werden dabei die hochfrequente Signalanteile entfernt, sodass der Ausgang des Tiefpassfilters 60 hauptsächlich den Gleichanteil G des Eingangssignals umfasst. Mittels des ADCs 62 kann das Signal anschließend digitalisiert werden und der Gleichanteil G digital bestimmt werden, beispielsweise indem eine Fouriertransformation des digitalisierten Signals bei 0 Hz ermittelt wird, was einer gleitenden Mittelwertbildung des Zeitsignals entspricht. Der Mittelwert kann somit mittels einfacher kostengünstiger Hardware ermittelt werden.

Fig. 7 veranschaulicht eine Ausführungsform der Füllstandsmessvorrichtung 12, bei der die Messleitung 20 gemeinsam mit der Auswerteeinheit 24 und der Spannungsquelle 18 auf derselben Leiterplatte 66 angeordnet ist. Die Füllstandsmessvorrichtung 12 kann somit sehr kompakt ausgebildet sein und kostengünstig hergestellt werden. Die Elektronikkomponenten mit Ausnahme der Messleitung 20 sind im oberen Teil 68 der Füllstandsmessvorrichtung 12 mit einem Verguss gegen Feuchtigkeit geschützt, sodass die Füllstandsmessvorrichtung 12 direkt in dem Behälter 16 des Mediums 14 untergebracht werden kann. Die Messleitung 20 kann beispielsweise als komplanare Leitung oder Mikrostrip-Leitung ausgebildet sein.

### Bezugszeichenliste

- 12: Füllstandsmessvorrichtung
- 14: Medium
- 16: Behälter
- 18: Spannungsquelle
- 20: Messleitung
- 22: Prozessanschluss
- 24: Auswerteeinheit
- 26: erster Widerstand
- 28: zweiter Widerstand
- 30: Komparator
- 32: Digital-Analog-Wandler
- 34: Mikrocontroller
- 36: Schalter
- 38: Stromquelle
- 40: Ausgangskondensator
- 42: schneller Schalter
- 44: Pulsgenerator
- 46: Referenzimpedanz
- 48: Mediumsimpedanz
- 50: Diode
- 52: erster Komparator
- 54: zweiter Komparator
- 56: Operationsverstärker
- 58: Mittelwertberechnungseinheit
- 60: Tiefpassfilter
- 62: Analog-Digital-Wandler
- 64: Vorverarbeitungsschaltung
- 66: Leiterplatte
- 68: obere Teil der Füllstandsmessvorrichtung

## Patentansprüche

1. Füllstandsmessvorrichtung (12) zur Bestimmung eines Füllstandes eines Mediums (14) in einem Behälter (16), umfassend:
eine Signalerzeugungsvorrichtung, die ausgebildet ist, ein elektrisches Signal zu erzeugen, welches eine Sprungfunktion oder eine Impulsfunktion umfasst;
eine Messleitung (20), die mit der Signalerzeugungsvorrichtung, insbesondere elektrisch, verbunden ist und von einem Prozessanschluss (22) bis in das Medium (14) hineinreicht, wobei die Messleitung (20) dazu dient, das elektrische Signal in den Behälter (16) und in Richtung des Mediums (14) zu leiten, wobei das elektrische Signal zumindest teilweise an der Oberfläche des Mediums (14) reflektiert wird und das reflektierte Signal das elektrische Signal beeinflusst; und
eine Auswerteeinheit (24), die ausgebildet ist, basierend auf dem beeinflussten elektrischen Signal den Füllstand des Mediums (14) zu ermitteln.

2. Füllstandsmessvorrichtung (12) nach Anspruch 1,
wobei Auswerteeinheit (24) ausgebildet, basierend auf dem beeinflussten elektrischen Signal eine Substitutionsgröße zu ermitteln, welche proportional zu einer Laufzeit des elektrischen Signals von dem Prozessanschluss (22) hin zur Mediumsoberfläche und zurück und/oder zu einer Entfernung zwischen Mediumsoberfläche und dem Prozessanschluss (22) ist, und basierend auf der Substitutionsgröße den Füllstand des Mediums (14) zu ermitteln,
wobei die Substitutionsgröße nicht der Laufzeit des elektrischen Signals entspricht.

3. Füllstandsmessvorrichtung (12) nach Anspruch 2,
wobei das beeinflusste elektrische Signal eine Pulsform aufweist, wobei die Auswerteeinheit (24) ausgebildet ist, basierend auf einer Pulsbreite eines, insbesondere ersten Pulses, des beeinflussten elektrischen Signals ein Rechtecksignal zu erzeugen, dessen Breite im Wesentlichen der Pulsbreite des beeinflussten elektrischen Signals entspricht, und basierend auf dem Rechtecksignal die Substitutionsgröße zu ermitteln.

4. Füllstandsmessvorrichtung (12) nach Anspruch 3,
wobei die Auswerteeinheit (24) ausgebildet ist, unter Verwendung eines Schwellenwertfilters das Rechtecksignal auf Basis des beeinflussten elektrischen Signals zu erzeugen, wobei das Rechtecksignal im Wesentlichen den Wert 0 annimmt, wenn das beeinflusste elektrische Signal kleiner als ein vorgegebener Schwellenwert ist, und einen vordefinierten Wert ungleich 0 annimmt, wenn das beeinflusste elektrische Signal größer als der vorgegebene Schwellenwert ist,
wobei die Auswerteeinheit (24) ausgebildet ist, unter Verwendung einer Integratorkomponente eine Integration des Rechtecksignals durchzuführen, um einen Integrationswert zu ermitteln, und
basierend auf dem Integrationswert den Füllstand des Mediums (14) zu ermitteln.

5. Füllstandsmessvorrichtung (12) nach Anspruch 4,
wobei die Auswerteeinheit (24) ausgebildet ist, den vorgegebenen Schwellenwert in Abhängigkeit des Impedanzunterschieds zwischen einer Referenzimpedanz, welche die Impedanz der Messleitung für den Abschnitt darstellt, welcher nicht in das Medium hineinreicht, und einer Mediumsimpedanz, welche die Impedanz der Messleitung für den Abschnitt darstellt, welcher in das Medium hineinreicht, festzulegen.

6. Füllstandsmessvorrichtung (12) nach Anspruch 4 oder 5,
wobei die Auswerteeinheit (24) ausgebildet ist, den vorgegebenen Schwellenwert des Schwellenwertfilters kontinuierlich oder in vorgegeben Zeitabständen anzupassen, insbesondere zu reduzieren.

7. Füllstandsmessvorrichtung (12) nach einem der Ansprüche 4 bis 6, wobei die Auswerteeinheit (24) mehrerer Schwellenwertfilter mit unterschiedlichen Schwellenwerten umfasst.

8. Füllstandsmessvorrichtung (12) nach einem der Ansprüche 4 bis 7, wobei die Auswerteeinheit (24) ausgebildet ist, mittels eines ADCs mit einer Abtastfrequenz von weniger als 10 MHz, weniger als 1 MHz, weniger als 100 kHz, weniger als 10 kHz oder weniger als 1 kHz ein durch die Integration des Rechtecksignals erzeugtes Integrationssignal abzutasten, um den Integrationswert zu ermitteln.

9. Füllstandsmessvorrichtung (12) nach einem der vorstehenden Ansprüche, wobei die Messleitung (20) kein Koaxialkabel umfasst.

10. Füllstandsmessvorrichtung (12) nach einem der vorstehenden Ansprüche, wobei das elektrische Signal eine Mehrzahl von Rechtecksimpulsen umfasst und das beeinflusste elektrische Signal eine Mehrzahl von, insbesondere gleichartigen, Pulsen umfasst,
wobei die Auswerteeinheit (24) ausgebildet ist, einen Gleichanteil des beeinflussten elektrischen Signals zu ermitteln und
basierend auf dem Gleichanteil des beeinflussten elektrischen Signals den Füllstand des Mediums (14) zu ermitteln.

11. Füllstandsmessvorrichtung (12) nach Anspruch 10,
wobei die Signalerzeugungsvorrichtung ausgebildet ist, die Rechtecksimpulse des elektrischen Signals in variablen Zeitabständen zu erzeugen.

12. Füllstandsmessvorrichtung (12) nach einem der vorstehenden Ansprüche, wobei die Referenzimpedanz (20) größer, insbesondere 5 mal, 10 mal, 12 mal oder 15 mal größer, als die Mediumsimpedanz (14) ist.

13. Füllstandsmessvorrichtung (12) nach einem der vorstehenden Ansprüche, wobei die Messleitung (20), insbesondere als komplanare Leitung oder Mikro-Stripleitung, gemeinsam mit der Auswerteeinheit (24) und der Signalerzeugungsvorrichtung auf derselben Leiterplatte (66) angeordnet ist.

14. Verfahren zur Bestimmung eines Füllstandes eines Mediums (14) in einem Behälter (16), umfassend die Schritte:
Erzeugen eines elektrischen Signals, welches die Form einer Sprungfunktion aufweist, mittels einer Signalerzeugungsvorrichtung,
Leiten des elektrischen Signals über eine Messleitung (20) in den Behälter (16) und in Richtung des Mediums (14), wobei die Messleitung (20) bis in das Medium (14) hineinreicht,
Reflektieren eines Teils des elektrischen Signals von der Oberfläche des Mediums (14), wobei das reflektierte Signal das elektrische Signal beeinflusst, und
Ermitteln des Füllstandes des Mediums (14) basierend auf dem beeinflussten elektrischen Signal mittels einer Auswerteeinheit (24).

15. Verfahren nach Anspruch 14,
wobei das elektrische Signal mit einer im Wesentlichen konstanten Grundimpedanz geführt wird.

## Geänderte Patentansprüche

### Geänderte Patentansprüche gemäss Regel 137(2) EPÜ.

1. Füllstandsmessvorrichtung (12) zur Bestimmung eines Füllstandes eines Mediums (14) in einem Behälter (16), umfassend:
eine Signalerzeugungsvorrichtung, die ausgebildet ist, ein elektrisches Signal zu erzeugen, welches eine Sprungfunktion oder eine Impulsfunktion umfasst;
eine Messleitung (20), die mit der Signalerzeugungsvorrichtung, insbesondere elektrisch, verbunden ist und von einem Prozessanschluss (22) bis in das Medium (14) hineinreicht, wobei die Messleitung (20) dazu dient, das elektrische Signal in den Behälter (16) und in Richtung des Mediums (14) zu leiten, wobei das elektrische Signal zumindest teilweise an der Oberfläche des Mediums (14) reflektiert wird und das reflektierte Signal das elektrische Signal beeinflusst; und
eine Auswerteeinheit (24), die ausgebildet ist, basierend auf dem beeinflussten elektrischen Signal den Füllstand des Mediums (14) zu ermitteln,
wobei die Auswerteeinheit (24) ferner ausgebildet, basierend auf dem beeinflussten elektrischen Signal eine Substitutionsgröße zu ermitteln, welche proportional zu einer Laufzeit des elektrischen Signals von dem Prozessanschluss (22) hin zur Mediumsoberfläche und zurück und/oder zu einer Entfernung zwischen Mediumsoberfläche und dem Prozessanschluss (22) ist, und basierend auf der Substitutionsgröße den Füllstand des Mediums (14) zu ermitteln,
wobei die Substitutionsgröße nicht der Laufzeit des elektrischen Signals entspricht,
wobei das beeinflusste elektrische Signal eine Pulsform aufweist,
wobei die Auswerteeinheit (24) ferner ausgebildet ist, basierend auf einer Pulsbreite eines, insbesondere ersten Pulses, des beeinflussten elektrischen Signals ein Rechtecksignal zu erzeugen, dessen Breite im Wesentlichen der Pulsbreite des beeinflussten elektrischen Signals entspricht, und basierend auf dem Rechtecksignal die Substitutionsgröße zu ermitteln.

2. Füllstandsmessvorrichtung (12) nach Anspruch 1,
wobei die Auswerteeinheit (24) ausgebildet ist, unter Verwendung eines Schwellenwertfilters das Rechtecksignal auf Basis des beeinflussten elektrischen Signals zu erzeugen, wobei das Rechtecksignal im Wesentlichen den Wert 0 annimmt, wenn das beeinflusste elektrische Signal kleiner als ein vorgegebener Schwellenwert ist, und einen vordefinierten Wert ungleich 0 annimmt, wenn das beeinflusste elektrische Signal größer als der vorgegebene Schwellenwert ist,
wobei die Auswerteeinheit (24) ausgebildet ist, unter Verwendung einer Integratorkomponente eine Integration des Rechtecksignals durchzuführen, um einen Integrationswert zu ermitteln, und
basierend auf dem Integrationswert den Füllstand des Mediums (14) zu ermitteln.

3. Füllstandsmessvorrichtung (12) nach Anspruch 2,
wobei die Auswerteeinheit (24) ausgebildet ist, den vorgegebenen Schwellenwert in Abhängigkeit des Impedanzunterschieds zwischen einer Referenzimpedanz, welche die Impedanz der Messleitung für den Abschnitt darstellt, welcher nicht in das Medium hineinreicht, und einer Mediumsimpedanz, welche die Impedanz der Messleitung für den Abschnitt darstellt, welcher in das Medium hineinreicht, festzulegen.

4. Füllstandsmessvorrichtung (12) nach Anspruch 2 oder 3,
wobei die Auswerteeinheit (24) ausgebildet ist, den vorgegebenen Schwellenwert des Schwellenwertfilters kontinuierlich oder in vorgegeben Zeitabständen anzupassen, insbesondere zu reduzieren.

5. Füllstandsmessvorrichtung (12) nach einem der Ansprüche 2 bis 4, wobei die Auswerteeinheit (24) mehrerer Schwellenwertfilter mit unterschiedlichen Schwellenwerten umfasst.

6. Füllstandsmessvorrichtung (12) nach einem der Ansprüche 2 bis 5,
wobei die Auswerteeinheit (24) ausgebildet ist, mittels eines ADCs mit einer Abtastfrequenz von weniger als 10 MHz, weniger als 1 MHz, weniger als 100 kHz, weniger als 10 kHz oder weniger als 1 kHz ein durch die Integration des Rechtecksignals erzeugtes Integrationssignal abzutasten, um den Integrationswert zu ermitteln.

7. Füllstandsmessvorrichtung (12) nach einem der vorstehenden Ansprüche, wobei die Messleitung (20) kein Koaxialkabel umfasst.

8. Füllstandsmessvorrichtung (12) nach einem der vorstehenden Ansprüche,
wobei das elektrische Signal eine Mehrzahl von Rechtecksimpulsen umfasst und das beeinflusste elektrische Signal eine Mehrzahl von, insbesondere gleichartigen, Pulsen umfasst,
wobei die Auswerteeinheit (24) ausgebildet ist, einen Gleichanteil des beeinflussten elektrischen Signals zu ermitteln und
basierend auf dem Gleichanteil des beeinflussten elektrischen Signals den Füllstand des Mediums (14) zu ermitteln.

9. Füllstandsmessvorrichtung (12) nach Anspruch 8,
wobei die Signalerzeugungsvorrichtung ausgebildet ist, die Rechtecksimpulse des elektrischen Signals in variablen Zeitabständen zu erzeugen.

10. Füllstandsmessvorrichtung (12) nach Anspruch 3,
wobei die Referenzimpedanz (20) größer, insbesondere 5 mal, 10 mal, 12 mal oder 15 mal größer, als die Mediumsimpedanz (14) ist.

11. Füllstandsmessvorrichtung (12) nach einem der vorstehenden Ansprüche, wobei die Messleitung (20), insbesondere als komplanare Leitung oder Mikro-Stripleitung, gemeinsam mit der Auswerteeinheit (24) und der Signalerzeugungsvorrichtung auf derselben Leiterplatte (66) angeordnet ist.

12. Verfahren zur Bestimmung eines Füllstandes eines Mediums (14) in einem Behälter (16), umfassend die Schritte:
Erzeugen eines elektrischen Signals, welches die Form einer Sprungfunktion aufweist, mittels einer Signalerzeugungsvorrichtung,
Leiten des elektrischen Signals über eine Messleitung (20) in den Behälter (16) und in Richtung des Mediums (14), wobei die Messleitung (20) bis in das Medium (14) hineinreicht,
Reflektieren eines Teils des elektrischen Signals von der Oberfläche des Mediums (14), wobei das reflektierte Signal das elektrische Signal beeinflusst, und
Ermitteln des Füllstandes des Mediums (14) basierend auf dem beeinflussten elektrischen Signal mittels einer Auswerteeinheit (24),
wobei mittels der Auswerteeinheit (24) basierend auf dem beeinflussten elektrischen Signal eine Substitutionsgröße ermittelt wird, welche proportional zu einer Laufzeit des elektrischen Signals von dem Prozessanschluss (22) hin zur Mediumsoberfläche und zurück und/oder zu einer Entfernung zwischen Mediumsoberfläche und dem Prozessanschluss (22) ist, und basierend auf der Substitutionsgröße der Füllstand des Mediums (14) ermittelt wird,
wobei die Substitutionsgröße nicht der Laufzeit des elektrischen Signals entspricht,
wobei das beeinflusste elektrische Signal eine Pulsform aufweist,
wobei mittels der Auswerteeinheit (24) basierend auf einer Pulsbreite eines,
insbesondere ersten Pulses, des beeinflussten elektrischen Signals ein Rechtecksignal erzeugt wird, dessen Breite im Wesentlichen der Pulsbreite des beeinflussten elektrischen Signals entspricht, und basierend auf dem Rechtecksignal die Substitutionsgröße ermittelt wird.

13. Verfahren nach Anspruch 12,
wobei das elektrische Signal mit einer im Wesentlichen konstanten Grundimpedanz geführt wird, wobei die Grundimpedanz die Impedanz einer elektrischen Komponente ohne Einfluss des umgebenden Mediums ist.
